# EUROPÄISCHE PATENTSCHRIFT

(11) **EP 0 730 107 B1**
(45) Veröffentlichungstag und Bekanntmachung des Hinweises auf die Patenterteilung: **10.05.2000**
(21) Anmeldenummer: 96101072.5
(22) Anmeldetag: 25.01.1996
(51) Int. Cl.: F16D 65/56, F16D 65/16

(54) **Scheibenbremse**
Disc brake
Frein à disque

(30) Priorität: 02.03.1995 DE 19507308
(43) Veröffentlichungstag der Anmeldung: 04.09.1996
(73) Patentinhaber: PERROT BREMSEN GmbH, 68229 Mannheim (DE)
(72) Erfinder: Antony, Paul, Dipl.-Ing., D-67550 Worms (DE)
(74) Vertreter: Patentanwälte Leinweber & Zimmermann

(56) Entgegenhaltungen:
- EP-A- 0 478 917
- DE-A- 4 307 019
- GB-A- 1 492 392
- US-A- 3 442 357
- US-A- 4 399 894

## Beschreibung

Die Erfindung betrifft eine Scheibenbremse mit einem Druckstück, das sich parallel zur Bremsscheibenebene erstreckt und das bei Betätigung einer Zuspannvorrichtung unter Verdrehen einer parallel zur Bremsscheibenebene angeordneten und sich bremsscheibenabgewandt an einem Widerlager abstützenden Nockenwelle einen Bremsbelag in Richtung der Achse einer Bremsscheibe gegen die Bremsscheibe drückt, und mit einer eine drehmomentabhängige Einwegkupplung beinhaltenden Nachstellvorrichtung zum selbsttätigen verschleißabhängigen Einstellen des Lüftspiels zwischen dem Bremsbelag und der Bremsscheibe.

Eine solche Scheibenbremse ist beispielsweise aus der DE 43 07 018 A1 und aus der EP 0 531 321 B1 bekannt.

Bei den bekannten Scheibenbremsen handelt es sich um Gleitsattel-Scheibenbremsen, wobei die drehmomentabhängige Einwegkupplung am Sattel und mit diesem axial verschieblich angebracht ist.

Bei Betätigung der genannten Gleitsattel-Scheibenbremsen erfolgt eine Verschiebung des Druckstücks mit zugehöriger Druckschraube gegen den mit dem Druckstück gekoppelten Bremsbelag, und über die Reaktionskraft erfolgt eine Sattelverschiebung in die entgegengesetzte Richtung, wodurch der mit dem Sattel gekoppelte Bremsbelag gegen die Bremsscheibe gedrückt wird.

Bei dieser Spreizung vollzieht die am Sattel gehalterte drehmomentabhängige Einwegkupplung eine axiale Relativverschiebung gegenüber demjenigen Teil (hier: die dem Druckstück zugeordnete Druckschraube), welches mit dem Druckstück in Richtung Bremsscheibe verschoben und gleichzeitig mittels der Nachstellvorrichtung im Sinne einer Verlängerung aus dem Druckstück herausgeschraubt werden soll.

Dieser Effekt tritt auch bei Festsattel-Scheibenbremsen auf. Zwar bleibt dabei die drehmomentabhängige Einwegkupplung stehen und bewegt sich nicht mit dem Sattel. Im Ergebnis erfolgt aber dennoch eine Relativbewegung zwischen der drehmomentabhängigen Einwegkupplung und dem Druckstück und damit der Druckschraube.

Eine Relativverschiebung zwischen der drehmomentabhängigen Einwegkupplung und dem Druckstück bzw. der Druckschraube birgt die Gefahr des Verkantens und Verklemmens in sich.

Die Befestigung der Nachstellung am Sattel ist darüber hinaus auch dann nachteilig, wenn der Sattel starken Schwingungen ausgesetzt ist, wie es beim Befahren von Schlechtwegstrecken der Fall ist. Es werden nämlich zwischen der Betätigung für das Druckstück und damit der Druckschraube einerseits und der Nachstellvorrichtung andererseits unterschiedliche Bewegungsabläufe erzwungen, die zu einer Verfälschung der Nachstellgröße führen bzw. das Lüftspiel zu groß oder zu klein werden lassen. In beiden Fällen ist die Funktion der Bremse beeinträchtigt.

Schließlich macht eine Befestigung der drehmomentabhängigen Einwegkupplung an dem Bremssattel die Gesamtkonstruktion groß und kompliziert, weshalb die Montage/Demontage aufwendig ist.

Aus der EP-A-478 917 ist eine Scheibenbremse mit einer quer zur Bremsscheibenebene liegenden Zuspannwelle bekannt. Dabei ist eine Einwegkupplung einer Nachstelleinrichtung mit einem gegen eine Bremsscheibe verschieblichen Druckstück gekoppelt.

Der Erfindung liegt die Aufgabe zugrunde, die Scheibenbremse der eingangs genannten Art derart weiterzubilden, daß ein Verkanten und Verklemmen zuverlässig ausgeschlossen ist, daß Sattelschwingungen sich nicht nachteilig auf die Nachstellfunktion auswirken, daß die Bauraumlänge minimiert ist und daß die Montage/Demontage der Bremse einfach ist.

Erfindungsgemäß wird die gestellte Aufgabe bei der Scheibenbremse der eingangs genannten Art dadurch gelöst, daß die drehmomentabhängige Einwegkupplung derart mit dem Druckstück gekoppelt ist, daß sie dessen Bewegungen in Richtung der Bremsscheibenachse folgt.

Durch die Kopplung der drehmomentabhängigen Einwegkupplung mit dem Druckstück bezüglich Bewegungen in Richtung der Bremsscheibenachse bewegen sich die beiden genannten Elemente immer miteinander. Relativverschiebungen der genannten Elemente zueinander finden nicht statt. Dadurch ist ein Verkanten und Verklemmen zuverlässig ausgeschlossen.

Die beschriebene Kopplung der drehmomentabhängigen Einwegkupplung mit dem Druckstück schließt wegen der Relativbewegung von Sattel und Druckstück bei Betätigung eine Kopplung der drehmomentabhängigen Einwegkupplung mit dem Sattel aus. Damit können Sattelschwingungen nicht mehr auf die drehmomentabhängige Einwegkupplung übertragen werden. Diese Schwingungen können daher auch nicht die Nachstellung beeinflussen.

Die vorgenannte Entkopplung von Sattel und drehmomentabhängiger Einwegkupplung ermöglicht es, die drehmomentabhängige Einwegkupplung vom Sattel weg und näher an dem Druckstück anzuordnen. Dadurch wird die Gesamtbauraumlänge verringert.

Schließlich kann die drehmomentabhängige Einwegkupplung wegen ihrer Kopplung mit dem Druckstück in einer Baueinheit mit dem Druckstück ausgeführt werden, was zu einer Vereinfachung der Montage/Demontage der Bremse führt.

In einer besonders einfachen und funktionsmäßig vorteilhaften Ausgestaltung der Erfindung ist vorgesehen, daß die drehmomentabhängige Einwegkupplung auf einer Druckhülse sitzt, die mit einer Druckschraube an der bremsscheibenabgewandten Seite des Bremsbelages verschraubt und in Richtung der Bremsscheibenachse mit dem Druckstück gekoppelt ist.

Um einem übermäßigen Einschrauben bei der Bremsenrückstellung und einem etwaig dadurch hervorgerufenen Verklemmen vorzubeugen, kann eine Einschraubbegrenzung an der Druckschraube und/oder der Druckhülse vorgesehen sein.

Erfindungsgemäß kann das Druckstück mit einer bremsscheibenzugewandten Fläche unter axialer Vorspannung an einer bremsscheibenabgewandten Fläche der Druckhülse anliegen. Dadurch werden beide Teile funktionsmäßig in die Nachstellvorrichtung einbezogen. Zur Vorspannung kann ein Haltering oder dergleichen dienen.

Besonders platzsparend ist die Gesamtanordnung, wenn die Druckhülse in einer Durchgangsöffnung des Druckstücks angeordnet ist.

Bevorzugt weist die Druckhülse an ihrem bremsscheibenzugewandten Ende einen Radialbund und an ihrem bremsscheibenabgewandten Ende einen verjüngten Verlängerungsbereich auf.

Wie beispielsweise in der EP 0 531 321 B1 gezeigt, kann vorgesehen sein, daß sich die Nockenwelle bei Betätigung um eine bezüglich der Bremsscheibe feststehende Achse dreht.

Bevorzugt ist jedoch die Lösung, wie sie in der DE 43 07 019 A1 sowie in der am 25. August 1994 hinterlegten deutschen Patentanmeldung P 44 30 258.4 gezeigt ist, wonach sich die Nockenwelle bei Betätigung um eine Achse dreht, die ihre Lage bezüglich der Bremsscheibe bei fortschreitender Zuspannung derart verändert, daß die Wirkungslinie der von der Nockenwelle auf das Druckstück ausgeübten Kraft ihre Lage bezüglich der Bremsscheibe nicht verändert.

Nach einer bevorzugten Ausführungsform der Erfindung ist die Nockenwelle mit der Nachstellvorrichtung mittels einer Stift/Nut-Verbindung gekoppelt.

Die Nachstellvorrichtung kann erfindungsgemäß eine Antriebshülse und eine Abtriebshülse aufweisen, die im Bereich eines Freiraums der Nockenwelle auf der Druckhülse entlang der Achse der Druckhülse angeordnet sind.

Dabei kann zwischen der Antriebshülse und der Abtriebshülse ein Axialspiel vorgesehen sein, um unerwünschte Verstellungen beim Lösen der Bremse zu vermeiden.

Zum Zwecke der schwingungsmäßigen Entkopplung des Widerlagers von der drehmomentabhängigen Einwegkupplung kann weiter erfindungsgemäß eine Ausnehmung in dem Widerlager vorgesehen sein, in die das bremsscheibenabgewandte Ende der Druckhülse hineinragt.

Die Ausnehmung kann auch eine Durchgangsöffnung sein. Dadurch ergibt sich die Möglichkeit, die Nachstellvorrichtung zurückzustellen, ohne das Widerlager entfernen zu müssen.

Bei der erfindungsgemäßen Scheibenbremse kann es sich - wie bereits oben ausgeführt - um eine Festsattelscheibenbremse handeln. Erfindungsgemäß bevorzugt ist die Scheibenbremse jedoch eine Gleitsattel-Scheibenbremse, und zwar mit dem Gleitsattel als Widerlager.

Die Drückhülse kann sich in eine Durchgangsöffnung in dem Widerlager bzw. Gleitsattel erstrecken, und es kann ein Führungs- und/oder Dichtelement zwischen dem Widerlager bzw. dem Gleitsattel und der Druckhülse vorgesehen sein.

Nachstehend ist die Erfindung anhand eines bevorzugten Ausführungsbeispiels unter Bezugnahme auf die beiliegende Zeichnung mit weiteren Einzelheiten näher erläutert. Dabei zeigen:

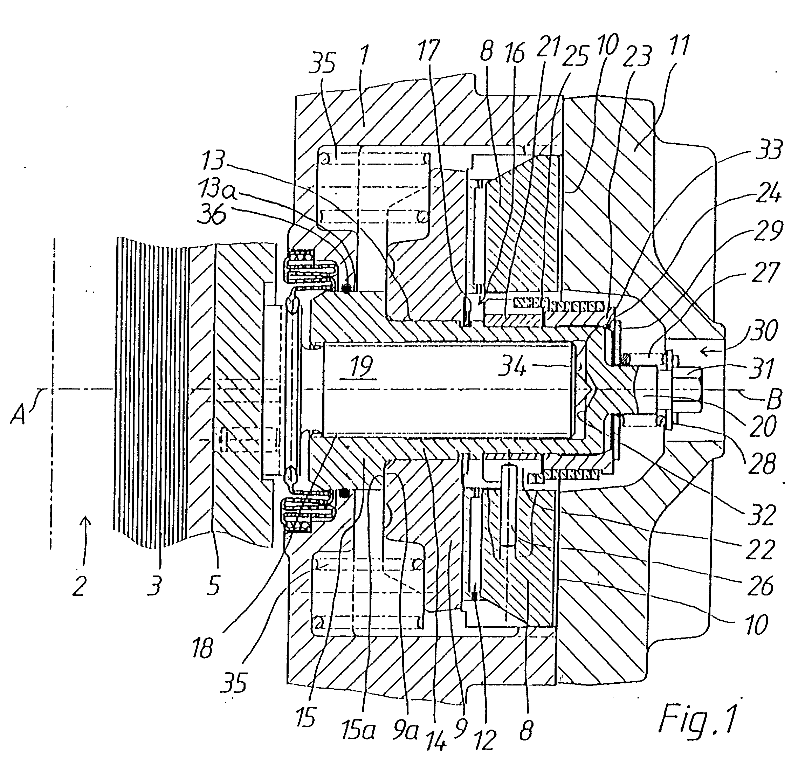

- Fig. 1: einen zur Bremsscheibenebene senkrechten Schnitt durch ein Ausführungsbeispiel der erfindungsgemäßen Scheibenbremse und
- Fig. 2: ebenfalls einen zur Bremsscheibenebene senkrechten, jedoch auch zu dem Schnitt nach Fig. 1 senkrechten Schnitt durch die Scheibenbremse nach Fig. 1.

Bei der in der Zeichnung dargestellten Scheibenbremse handelt es sich um eine Gleitsattel-Scheibenbremse. Sie weist einen Bremssattel 1 auf, der in üblicher Weise mit seinen beiden Schenkeln eine Bremsscheibe 2 übergreift. Beidseits der Bremsscheibe 2 sind Bremsbeläge 3, 4 an Belagträgern 5 in einem nicht dargestellten Bremsenträger bzw. im Bremssattel 1 geführt und abgestützt. Der Bremssattel 1 ist in nicht näher dargestellter Weise mit Hilfe von Führungsmitteln quer zur Bremsscheibe 2 verschieblich gelagert. Der Bremssattel 1 weist einseitig eine Zuspannvorrichtung 6 zur Betätigung der Bremse auf.

Die Zuspannvorrichtung 6 besteht im wesentlichen aus einem Bremshebel 7, der mit einer parallel zur Bremsscheibenebene angeordneten Nockenwelle 8 verbunden ist, sowie aus einem im Bremssattel 1 gegen den Bremsbelag 3 verschieblichen Druckstück 9, das sich innerhalb des Bremssattels parallel zur Bremsscheibenebene erstreckt.

Die Nockenwelle 8 stützt sich bremsscheibenabgewandt (hier rechts) an Stützflächen 10 eines am Bremssattel 1 angeschraubten Deckels 11 ab und ist bremsscheibenzugewandt (hier links) durch etwa halbkreiszylindrische Lagerungen 12 vom Druckstück 9 abgestützt.

An dieser Stelle sei ausdrücklich darauf hingewiesen, daß die Erfindung unabhängig von Art und Ausführung der Zuspannung 6 ist. Bei der in der Zeichnung dargestellten Zuspannvorrichtung sowie etwa bei Zuspannvorrichtungen nach der DE 43 07 019 A1 sowie nach der am 25. August 1994 hinterlegten deutschen Patentanmeldung P 44 30 258.4 gleitet die Drehachse der Nockenwelle 8 entlang einer Ebene, die parallel zur Bremsscheibenebene verläuft. Genauso gut kann die Zuspannvorrichtung 6 aber auch so ausgelegt sein, daß die Nockenwelle um eine bezüglich des Bremssattels feststehende Achse drehbar gelagert ist.

In einer zur Achse der Bremsscheibe 2 parallelen Achse A-B weist das Druckstück 9 eine Durchgangsöffnung 13 auf, in der eine Druckhülse 14 gelagert ist. Die Druckhülse 14 ist bremsscheibenseitig mit einem Radialbund 15 versehen und erstreckt sich koaxial zur Achse A-B entlang eines Freiraumes 16 der Nockenwelle 8. Bremsscheibenabgewandt ist die Druckhülse 14 mittels eines Halteringes 17 oder dergleichen gegenüber dem Druckstück 9 axial vorgespannt gehalten.

In der Druckhülse 14 ist eine in Richtung der Bremsscheibe 2 offene Gewindeöffnung 18 ausgebildet, in die eine Druckschraube 19 eingeschraubt ist, welche sich ihrereseits drehfest an dem betätigungsseitigen Bremsbelag 3 bzw. an einem beliebigen Zwischenteil abstützt. An ihrem bremsscheibenabgewandten Ende ist die Druckhülse 14 geschlossen und läuft in einem nachstehend erläuterten Verlängerungsbereich 20 aus.

Eine bremsscheibenzugewandte Fläche 9a des Druckstücks liegt reibschlüssig an einer bremsscheibenabgewandten Fläche 15a des Radialbundes 15 an. Mithin ist die Druckhülse 14 bezüglich einer Verschiebung in Richtung der Achse A-B mit dem Druckstück 9 gekoppelt, jedoch bei Überwindung der Haftreibung zwischen den Flächen 9a und 15a um die Achse A-B gegenüber dem Druckstück 9 drehbar in dem Druckstück 9 gelagert. Demgegenüber ist die Druckschraube 19 drehfest an dem Belagträger 5 befestigt. Bei Drehung der Druckhülse 14 mittels einer weiter unten näher erläuterten Nachstellvorrichtung wird die Druckschraube 19 aus der Druckhülse 14 herausgeschraubt.

Annähernd im Bereich des Freiraumes 16 sind die Elemente der Nachstellvorrichtung kompakt und raumsparend hintereinanderliegend angeordnet und mit der Druckhülse 14 und damit mit dem Druckstück 9 gekoppelt. Die Nachstellvorrichtung weist insbesondere eine Antriebshülse 21 mit wenigstens einer Axialnut 22, eine Abtriebshülse 23 mit einem Drehmomentbegrenzungsbereich 24 gegenüber der Druckhülse 14, eine Einwegkupplung 25 mit der Antriebs- und der Abtriebshülse 21, 23 sowie einen Mitnahmestift 26 auf, der in der Nockenwelle 8 befestigt ist und in die Axialnut 22 der Antriebshülse 21 eingreift. Die Elemente 21 bis 25 der Nachstellvorrichtung sind mittels einer Druckfeder 27 gehaltert und vorgespannt, die sich einerseits auf dem Verlängerungsbereich 20 mittels eines Halterings 28 abstützt, um andererseits über eine Stützscheibe 29 ihre Federvorspannung gegen den Drehmomentbegrenzungsbereich 24-hier ein Reibkonus - der Abtriebshülse 23 aufzubringen.

Der Verlängerungsbereich 20 der Druckhülse 14 erstreckt sich in eine Bremssattelöffnung 30 größeren Durchmessers wodurch die vorstehenden Elemente der Nachstellvorrichung vom Bremssattel 1 entkoppelt sind, und weist an seinem freien Ende ein Profil 31 auf, über das die Bremse mittels geeigneten Werkzeugs zugestellt oder gelöst werden kann. Die genannte Entkopplung stellt sicher, daß keine Schwingungen von dem Bremssattel 1 auf die genannten Elemente der Nachstellvorrichtung übertragen werden können.

Zwischen einem Boden 32 der Druckhülse 14 und der zugeordneten Stirnseite 13 der Druckschraube 19 ist eine Einschraubbegrenzung 34 vorgesehen - hier als Beispiel in Form eines Kegels ausgeführt -, wodurch ein übermäßiges Einschrauben bei der Bremsenrückstellung zwischen der Druckhülse 14 und der Druckschraube 19 verhindert wird. Ein leichtgängiger Nachstellvorgang wäre ansonsten durch das Verklemmen beider Teile gefährdet.

Die im Bremssattel 1 angeordneten Elemente werden durch mindestens eine Druckfeder 35 im Bremslösezustand von der Bremsscheibe 2 weg gegen die Bremssattelrückseite - hier Deckel 11 - vorgespannt.

Zur Verbesserung der Führung und zur Festlegung der Druckhülse 14 ist im Bereich zwischen einer Durchgangsöffnung 13a des Bremssattels 1 und dem Radialbund 15 der Druckhülse 14 ein Führungs- bzw. Dichtelement 36 angeordnet.

Die vorstehend beschriebene Scheibenbremse mit Nachstellvorrichtung arbeitet wie folgt:

In unbetätigtem Zustand weisen beiden Bremsbeläge 3, 4 ein Lüftspiel zur Bremsscheibe 2 auf. Bei einer Bremsbetätigung wird der Bremshebel 7 in Richtung D geschwenkt, wodurch die Nockenwelle 8 entgegen dem Uhrzeigersinn gedreht wird. Durch ihre Nockenkontur und ihre beidseitigen Abstützungen 10, 12 an dem Deckel 11 einerseits und dem Druckstück 9 andererseits wird das Druckstück 9 gegen die Vorspannkraft der Druckfeder(n) 35 in Richtung der Bremsscheibe 2 verschoben.

Dabei nimmt das Druckstück 9 die darin gelagerte Druckhülse 14 über deren Radialbund 15 sowie die in die Druckhülse 14 eingeschraubte Druckschraube 19 in Richtung der Achse A-B gegen die Bremsscheibe 2 mit. Beim Bremslösevorgang schiebt das Druckstück 9 über den Haltering 17 oder dergleichen die Druckhülse 14 wieder zurück. Die Druckhülse 14 ist somit bezüglich einer Axialverschiebung mit dem Druckstück 9 gekoppelt. Wegen der Anordnung der Nachstellelemente 21, 23, 25, 27 bis 29 auf der Druckhülse 14 und wegen deren Entkopplung vom Bremssattel 1 (vgl. Öffnung 30), vollziehen diese Elemente jede Axialverschiebung der Druckhülse 14 in der gleichen Richtung mit. Jeglicher Kontakt zwischen den genannten Nachstellelementen und dem Bremssattel 1 ist ausgeschlossen. Es findet keine axiale Relativverschiebung zwischen den genannten Nachstellelementen und dem Druckstück statt. Die entsprechenden Nachteile des Standes der Technik sind daher vermieden. Dies gilt insbesondere für ein beim Stand der Technik zu besorgendes Verkanten oder Verklemmen, was zu einer Fehlfunktion beim Nachstellen führen kann. Darüber hinaus ist die Übertragung von Sattelschwingungen auf die vom Bremssattel 1 abgekoppelten oben genannten Nachstellelemente ausgeschlossen.

Bei ihrer Drehung nimmt die Nockenwelle 8 den darin befestigten Mitnahmestift 26 mit, der über den Eingriff in die Axialnut 22 die Antriebshülse 21 verdreht. Diese Drehbewegung wird über die Einwegkupplung 25 (hier: Schlingfeder) auf die Abtriebshülse 23 übertragen. Da die Abtriebshülse 23 über die am Haltering 28 abgestützte Druckfeder 27 mit ihrem konischen Drehmomentbegrenzungsbereich 24 gegen die Druckhülse 14 gedrückt wird, erfolgt eine Drehung der Druckhülse 14 um die Achse A-B. Dabei ist die Druckhülse 14 bezüglich der Drehung von dem Druckstück 9 entkoppelt. Aufgrund dieser Drehung wird die nicht drehbar gehalterte Druckschraube 19 aus der Druckhülse 9 im Sinne einer Abstandsverlängerung herausgeschraubt.

Liegen die Bremsbeläge 3, 4 an der Bremsscheibe 2 an und erfolgt eine weitere Verdrehung der Nockenwelle 8 im Krafthub, so übersteigt die Haftreibung zwischen der Fläche 15a des Radialbundes 15 und der Fläche 9a des Druckstücks 9 bzw. in der Gewindepaarung zwischen Druckhülse 14 und Druckschraube 19 dasjenige Nachstellmoment, das durch den vorgespannten Drehmomentbegrenzungsbereich 24 der Abtriebshülse 23 auf die Druckhülse 14 übertragen werden kann. Somit rutscht die Abtriebshülse 23 gegenüber der Druckhülse 14 durch. Ein weiteres Herausschrauben der Druckschraube 19 in Richtung Bremsscheibe 2 erfolgt jetzt nicht mehr.

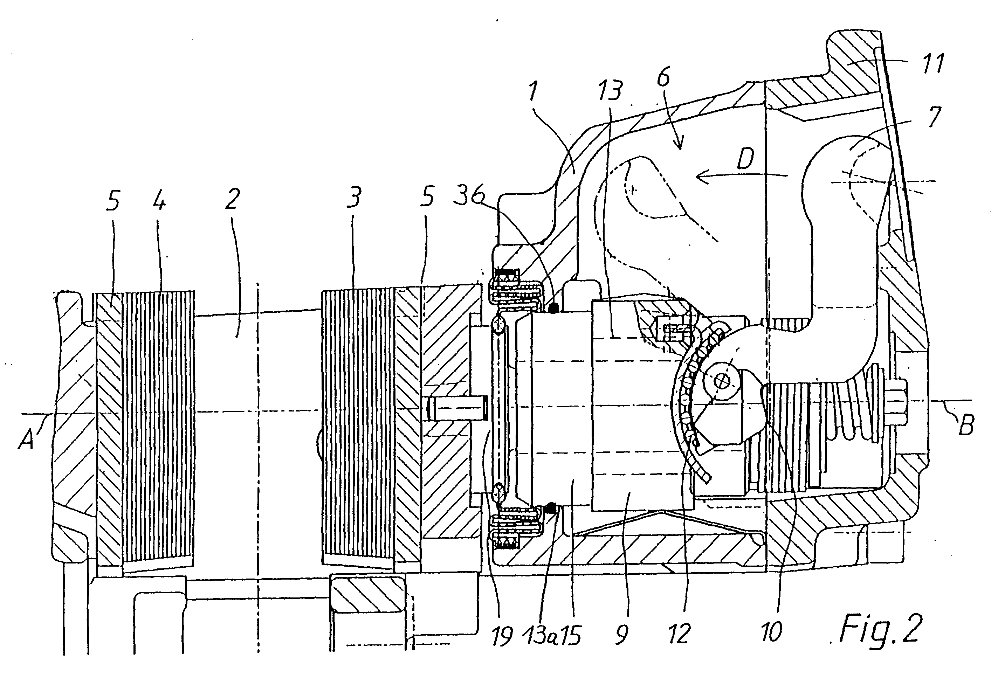

Beim Bremslösehub werden alle inneliegenden Teile durch die Druckfeder(n) 35 zurückgeschoben. Dabei vollziehen der Bremshebel 7 eine Bewegung entgegen dem Pfeil D in Fig. 2 und die Nockenwelle eine Drehung im Uhrzeigersinn. Der Mitnahmestift 26 verdreht hierbei die Antriebshülse 21 entgegen der Nachstellrichtung, wobei über die in dieser Bewegungsrichtung unwirksame Einwegkupplung 25 alle weiteren Nachstellelemente von Drehbewegungen ausgenommen werden.

Um nachteilige Rückstellbewegungen während dieser Rückdrehung der Antriebshülse 21 von der angrenzenden Abtriebshülse 23 und somit von der Druckhülse 14 abzuhalten, ist zwischen den beiden Elementen 21, 23 ein geringes Axialspiel vorhanden. Somit ist eine unerwünschte Drehmitnahme durch Veränderung eines Reibschlusses zwischen den Anlageflächen der beiden Hülsen 21, 23 und der Haftreibung zwischen der Fläche 15a des Radialbundes 15 und der Fläche 9a des Druckstücks 9 wirkungsvoll vermieden. Die erforderliche Haftreibung als Haltemoment wird zwischen dem Druckstück 9 und der Druckhülse 14 mit dem Radialbund 15 durch den diese Elemente axial vorspannenden Haltering 17 oder dergleichen erzeugt.

Durch diesen Aufbau wird nicht nur die Nachstellfunktion sicherer. Vielmehr wird die Bremse auch kompakter. Ferner wird eine Vereinfachung bei der Bremsenmontage/Demontage erzielt. Sämtliche Nachstellelemente sind nämlich über das Druckstück gehalten und mit diesem gekoppelt, wodurch diese Baugruppe gegenüber ungekoppelten Einzelteilen wesentlich einfacher in den Bremssattel ein- bzw. ausgebaut werden kann.

### BEZUGSZEICHENLISTE

- 1: Bremssattel
- 2: Bremsscheibe
- 3: Betätigungsseitiger Bremsbelag
- 4: Felgenseitiger Bremsbelag
- 5: Belagträger
- 6: Zuspannvorrichtung
- 7: Bremshebel
- 8: Zuspannwelle
- 9: Druckstück
- 9a: Bremsscheibenzugewandte Fläche des Druckstücks
- 10: Stützfläche
- 11: Deckel
- 12: Lagerung
- 13: Durchgangsöffnung
- 13a: Durchgangsöffnung
- 14: Druckhülse
- 15: Radialbund
- 15a: Bremsscheibenabgewandte Fläche des Radialbunds
- 16: Freiraum
- 17: Haltering
- 18: Gewindeöffnung
- 19: Druckschraube
- 20: Verlängerungsbereich
- 21: Antriebshülse
- 22: Axialnut
- 23: Abtriebshülse
- 24: Drehmomentbegrenzungsbereich
- 25: Einwegkupplung
- 26: Mitnahmestift
- 27: Druckfeder
- 28: Haltering
- 29: Stützscheibe
- 30: Bremssattelöffnung
- 31: Profil
- 32: Boden der Druckhülse
- 33: Stirnseite der Druckschraube
- 34: Einschraubbegrenzung
- 35: Druckfeder
- 36: Führungs- und Dichtelement
- D: Schwenkrichtung
- A-B: Parallel zur Bremsscheibenachse liegende Achse

## Patentansprüche

1. Scheibenbremse mit einem Druckstück (9), das sich parallel zur Bremsscheibenebene erstreckt und das bei Betätigung einer Zuspannvorrichtung (6) unter Verdrehen einer parallel zur Bremsscheibenebene angeordneten und sich bremsscheibenabgewandt an einem Widerlager (1, 11) abstützenden Nockenwelle (8) einen Bremsbelag (3) in Richtung (A-B) der Achse einer Bremsscheibe (2) gegen die Bremsscheibe (2) drückt, und mit einer eine drehmomentabhängige Einwegkupplung (21, 23, 25, 27, 28, 29) beinhaltenden Nachstellvorrichtung zum selbsttätigen verschleißabhängigen Einstellen des Lüftspiels zwischen dem Bremsbelag (3) und der Bremsscheibe (2), dadurch gekennzeichnet, daß die drehmomentabhängige Einwegkupplung (21, 23, 25, 27, 28, 29) derart mit dem Druckstück (9) gekoppelt ist, daß sie dessen Bewegungen in Richtung (A-B) der Bremsscheibenachse folgt.

2. Scheibenbremse nach Anspruch 1, dadurch gekennzeichnet, daß die drehmomentabhängige Einwegkupplung (21, 23, 25, 27, 28, 29) auf einer Druckhülse (14) sitzt, die mit einer Druckschraube (19) an der bremsscheibenabgewandten Seite des Bremsbelages (3) verschraubt und in Richtung (A-B) der Bremsscheibenachse mit dem Druckstück (9) gekoppelt ist.

3. Scheibenbremse nach Anspruch 2, gekennzeichnet durch eine Einschraubbegrenzung (34) an der Druckschraube (19) und/oder der Druckhülse (14).

4. Scheibenbremse nach Anspruch 2 oder 3, dadurch gekennzeichnet, daß das Druckstück (9) mit einer bremsscheibenzugewandten Fläche (9a) unter axialer Vorspannung an einer bremsscheibenabgewandten Fläche (15a) der Druckhülse (14) anliegt.

5. Scheibenbremse nach Anspruch 2, 3 oder 4, dadurch gekennzeichnet, daß die Druckhülse (14) in einer Durchgangsöffnung (13) des Druckstücks (9) angeordnet ist.

6. Scheibenbremse nach einem der Ansprüche 2 bis 5, dadurch gekennzeichnet, daß die Druckhülse (14) an ihrem bremsscheibenzugewandten Ende einen Radialbund (15) und an ihrem bremsscheibenabgewandten Ende einen verjüngten Verlängerungsbereich (20) aufweist.

7. Scheibenbremse nach einem der vorangehenden Ansprüche, dadurch gekennzeichnet, daß sich die Nockenwelle (8) bei Betätigung um eine bezüglich der Bremsscheibe (2) fesststehende Achse dreht.

8. Scheibenbremse nach einem der Ansprüche 1 bis 6, dadurch gekennzeichnet, daß sich die Nockenwelle (8) bei Betätigung um eine Aschse dreht, die ihre Lage bezüglich der Bremsscheibe (2) bei fortschreitender Zuspannung derart verändert, daß die Wirkungslinie der von der Nockenwelle (8) auf das Druckstück (9) ausgeübten Kraft ihre Lage bezüglich der Bremsscheibe (2) nicht verändert.

9. Scheibenbremse nach einem der vorangehenden Ansprüche, dadurch gekennzeichnet, daß die Nockenwelle (8) mit der Nachstellvorrichtung mittels einer Stift/Nut-Verbindung (26, 22) gekoppelt ist.

10. Scheibenbremse nach einem der Ansprüche 2 bis 9, dadurch gekennzeichnet, daß die Nachstellvorrichtung eine Antriebshülse (21) und eine Abtriebshülse (23) aufweist, die im Bereich eines Freiraumes (16) der Nockenwelle (8) auf der Druckhülse (14) entlang der Achse der Druckhülse (14) angeordnet sind.

11. Scheibenbremse nach Anspruch 10, gekennzeichnet durch ein Axialspiel zwischen der Antriebshülse (21) und der Antriebshülse (23).

12. Scheibenbremse nach einem der Ansprüche 7 bis 11, gekennzeichnet durch eine Ausnehmung (30) in dem Widerlager (1, 11), in die das bremsscheibenabgewandte Ende (20) der Druckhülse (14) hineinragt.

13. Scheibenbremse nach Anspruch 12, dadurch gekennzeichnet, daß die Ausnehmung (30) eine Durchgangsöffnung ist.

14. Scheibenbremse nach einem der Ansprüche 7 bis 13, dadurch gekennzeichnet, daß das Widerlager (1, 11) ein Gleitsattel ist.

15. Scheibenbremse nach Anspruch 14, dadurch gekennzeichnet, daß sich die Druckhülse (14, 15) in eine Durchgangsöffnung (13a) in dem Gleitsattel (1) erstreckt und ein Führungs- und/oder Dichtelement (36) zwischen dem Gleitsattel (1) und der Druckhülse (14, 15) vorgesehen ist.

## Claims

1. A disc brake comprising a thrust piece (9) which extends parallel to the brake disc plane and which, on the actuation of a brake application unit (6) and with the rotation of a camshaft (8) which is disposed parallel to the brake disc plane and which is supported on a thrust bearing (1, 11) facing away from the brake disc, presses a brake pad (3) against the brake disc (2) in the direction (A-B) of the axis of a brake disc (2), and comprising an adjustment unit, containing a torque-dependent one way clutch (21, 23, 25, 27, 28, 29), for automatically adjusting the air gap between the brake pad (3) and the brake disc (2) depending on wear, characterised in that the torque-dependent one way clutch (21, 23, 25, 27, 28, 29) is coupled to the thrust piece (9) so that it follows the movements thereof in the direction (A-B) of the brake disc axis.

2. A disc brake according to claim 1, characterised in that the torque-dependent one way clutch (21, 23, 25, 27, 28, 29) is seated on a thrust bushing (14), which is screwed by a thrust screw (19) to the side of the brake pad (3) facing away from the brake disc and which is coupled to the thrust piece (9) in the direction (A-B) of the brake disc axis.

3. A disc brake according to claim 2, characterised by a screw-in limit stop (34) on the thrust screw (19) and/or on the thrust bushing (14).

4. A disc brake according to claims 2 or 3, characterised in that a face (9a) of the thrust piece (9) which faces the brake disc is seated under an axial prestress against a face (15a) of the thrust bushing (14) which faces away from the brake disc.

5. A disc brake according to claims 2, 3 or 4, characterised in that the thrust bushing (14) is disposed in a through opening of the thrust piece (9).

6. A disc brake according to any one of claims 2 to 5, characterised in that the thrust bushing (14) has a radial collar (15) at its end facing the brake disc and has a diminished extension region (20) at its other end.

7. A disc brake according to any one of the preceding claims, characterised in that when the brake is applied the camshaft (8) rotates about an axis which is fixed with respect to the brake disc (2).

8. A disc brake according to any one of claims 1 to 6, characterised in that when the brake is applied the camshaft (8) rotates about an axis which changes its position with respect to the brake disc (2) with the progressive application of the brake so that the line of action of the force exerted by the camshaft (8) on the thrust piece (9) does not change its position with respect to the brake disc (2).

9. A disc brake according to any one of the preceding claims, characterised in that the camshaft (8) is coupled to the adjustment device by means of a pin and groove connection (26, 22).

10. A disc brake according to any one of claims 2 to 9, characterised in that the adjustment device comprises a driving bushing (21) and a driven bushing (23) which are disposed on the thrust bushing (14), in the region of a free space (16) of the camshaft (8) along the axis of the thrust bushing (14).

11. A disc brake according to claim 10, characterised by an axial clearance between the driving bushing (21) and the driven bushing (23).

12. A disc brake according to any one of claims 7 to 11, characterised by a recess (30) in the thrust bearing (1,11), into which recess the end (20) of the thrust bushing (14) protrudes which faces away from the brake disc.

13. A disc brake according to claim 12, characterised in that the recess (30) is a through opening.

14. A disc brake according to any one of claims 7 to 13, characterised in that the thrust bearing (1, 11) is a floating caliper.

15. A disc brake according to claim 14, characterised in that the thrust bushing (14, 15) extends into a through opening (13) in the floating caliper and that a guiding and/or sealing element (36) is provided between the floating caliper (1) and the thrust bushing (14, 15).

## Revendications

1. Frein à disque avec une pièce de poussée (9) qui est disposée parallèlement au plan du disque de frein et qui vient appuyer contre le disque de frein (2) une plaquette de frein (3) en direction (A-B) de l'axe d'un disque de frein (2) lorsque le mécanisme (6) est actionné sous l'action de la rotation d'un arbre à came (8) se trouvant parallèle au plan du disque de frein et prenant appui à l'opposé du disque de frein sur une butée (1, 11), et avec un dispositif de rattrapage comportant un embrayage unidirectionnel (21, 23, 25, 27, 28, 29) dépendant du couple de rotation servant à l'auto-réglage du jeu fonctionnel entre la plaquette (3) et le disque de frein (2) en fonction de l'usure, caractérisé par le fait que l'embrayage unidirectionnel (21, 23, 25, 27, 28, 29) dépendant du couple de rotation est accouplé à la pièce de poussée (9) de sorte qu'il suit ses mouvements en direction (A-B) de l'axe du disque de frein.

2. Frein à disque suivant la spécification 1 caractérisé par le fait que l'embrayage unidirectionnel (21, 23, 25, 27, 28, 29) dépendant du couple de rotation est positionné sur une bague de poussée (14) qui est assemblée par vissage avec une vis de poussée (19) du côté opposé de la plaquette de frein (3) par rapport au disque de frein et qui est solidaire en direction (A-B) de l'axe du disque de frein avec la pièce de poussée (9).

3. Frein à disque suivant la spécification 3 caractérisé par une butée (34) de limite de vissage au niveau de la vis de poussée (19) et/ou de la bague de poussée (14).

4. Frein à disque suivant les spécifications 2 ou 3 caractérisé par le fait qu'une face (9a) de la pièce de poussée (9) se trouvant du côté du disque de frein est en appui avec précontrainte axiale contre une face (15a) de la bague de poussée (14) se trouvant à l'opposé du disque de frein.

5. Frein à disque suivant les spécifications 2, 3 ou 4 caractérisé par le fait que la bague de poussée (14) passe à travers un trou (13) de la pièce de poussée (9).

6. Frein à disque suivant l'une des spécifications 2 à 5 caractérisé par le fait que la bague de poussée (14) dispose à son extrémité située côté disque de frein d'un épaulement radial (15) et à son extrémité située côté opposé au disque de frein d'une zone de prolongement effilée (20).

7. Frein à disque suivant l'une des spécifications précédentes caractérisé par le fait que l'arbre à came (8) pivote lors de l'actionnement autour d'un axe fixe par rapport au disque de frein.

8. Frein à disque suivant l'une des spécifications 1 à 6 caractérisé par le fait que, lors de l'actionnement, l'arbre à came (8) pivote autour d'un axe dont la position par rapport au disque de frein (2) change à mesure du serrage de telle sorte que la ligne d'application de la force exercée par l'arbre à came (8) sur la pièce de poussée (9) ne voit pas sa position changer par rapport au disque de frein (2).

9. Frein à disque suivant l'une des spécifications précédentes caractérisé par le fait que l'arbre à came (8) est accouplé au dispositif de rattrapage au moyen d'une liaison pion/rainure (26, 22).

10. Frein à disque suivant l'une des spécifications 2 à 9 caractérisé par le fait que le dispositif de rattrapage dispose d'un bague d'entraînement (21) et d'une bague secondaire (23) qui sont placées dans un espace libre (16) de l'arbre à came (8) sur la bague de poussée (14) le long de l'axe de la bague de poussée (14).

11. Frein à disque suivant la spécification 10 caractérisé par un jeu axial entre la bague d'entraînement (21) et la bague secondaire (23).

12. Frein à disque suivant les spécifications 7 à 11 caractérisé par un évidement (30) dans la butée (1, 11) à travers lequel passe l'extrémité (20), située côté opposé au disque de frein, de la bague de poussée (14).

13. Frein à disque suivant la spécification 12 caractérisé par le fait que l'évidement (30) est un trou débouchant.

14. Frein à disque suivant les spécifications 7 à 13 caractérisé par le fait que la butée (1, 11) est un étrier coulissant.

15. Frein à disque suivant la spécification 14 caractérisé par le fait que la bague de poussée (14, 15) passe dans un trou débouchant (13a) de l'étrier coulissant (1) et qu'une pièce de guidage et/ou d'étanchéité (36) est prévue entre l'étrier coulissant (1) et la bague de poussée (14, 15).
